Europäisches Patentamt

(19) European Patent Office    (11) Publication number: **0 112 792**
**B1**

Office européen des brevets

(12)    **EUROPEAN PATENT SPECIFICATION**

(45) Date of publication of patent specification: **20.05.87**    (51) Int. Cl.⁴: **F 03 D 7/04,** F 03 D 7/02, F 03 D 9/00

(21) Application number: **83630180.4**

(22) Date of filing: **04.11.83**

(54) **Blade pitch angle control for large wind turbines.**

(30) Priority: **08.11.82 US 440122**

(43) Date of publication of application:
**04.07.84 Bulletin 84/27**

(45) Publication of the grant of the patent:
**20.05.87 Bulletin 87/21**

(84) Designated Contracting States:
**DE FR GB IT NL SE**

(56) References cited:
**EP-A-0 008 584**
**FR-A-1 314 086**
**GB-A-1 050 088**
**GB-A-2 071 781**
**US-A-3 974 395**
**US-A-4 160 170**

**BROWN BOVERI REVIEW, vol. 69, no. 3, March 1982, pages 57-64, Baden, CH., H. SCHWEICKHARDT et al.: "Converter-fed synchronuous generator systems for wind power plants"**

(73) Proprietor: **UNITED TECHNOLOGIES CORPORATION**
**United Technologies Building 1, Financial Plaza**
**Hartford, CT 06101 (US)**

(72) Inventor: **Harner, Kermit Ivan**
**7 Diana Lane**
**Windsor Connecticut 06095 (US)**
Inventor: **Niessen, Frank Richard**
**225 South Water Street**
**East Windsor Connecticut 06088 (US)**
Inventor: **Sherman, Robert**
**8 Cascade Road**
**West Hartford Connecticut 06117 (US)**

(74) Representative: **Waxweiler, Jean et al**
**OFFICE DENNEMEYER S.à.r.l. P.O. Box 1502**
**L-1015 Luxembourg (LU)**

## Description

This invention relates to the control of blade pitch angle in horizontal axis wind turbine-generators and particularly to blade pitch angle control under conditions of low wind velocity.

Modern, large horizontal axis wind turbine-generators generally include two or more variable pitch blades mounted on a rotor which drives a synchronous generator through a gear box, the gear box serving to step up the rotational speed of the main turbine shaft to the speed required for synchronous operation of the generator. In such wind turbine-generator, it is generally desirable to control blade pitch in response to wind conditions and turbine output requirements. A suitable blade pitch control system for large wind turbine-generators is disclosed in U.S. Patent No. 4,193,005 to Kos et al. This control system is a closed-loop system which provides a blade pitch angle reference signal to a blade pitch change actuation system based on such parameters as wind conditions, desired turbine-generator operating conditions and actual turbine-generator operating conditions. The system of the Kos et al patent includes four discrete controllers: a first controlling rotor acceleration during start up, a second controlling rotor deceleration during shutdown, a third controlling rotor speed when the synchronous generator is off-line and a fourth controlling power or torque when the generator is on-line. The controllers provide a time derivative pitch angle reference signal as an input signal to an integrator. The output of the integrator is the blade pitch angle reference signal noted hereinabove. The integrator includes maximum and minimum blade angle stops. The maximum stop corresponds to a blade pitch angle of 90° (full blade feathering) while the minimum blade angle stop is variable, being a function of rotor speed and measured wind speed.

As explained in the Kos et al patent, the blade pitch angle reference signal set by the controller is limited to a minimum value (the minimum integrator stop) under wind velocity conditions between cut-in velocity (the minimum wind velocity at which the wind turbine-generator is capable of producing useful power), and rated velocity (the minimum wind velocity at which the wind turbine-generator may produce rated power). It is crucial to the operation of the wind turbine that in this range of wind velocities, the pitch angle of the blades be set to such a minimum value for capture of the greatest possible amount of energy from the wind stream. At wind velocities greater than those within this range, more than enough wind energy is available for the generation of rated power and hence, energy is "spilled" from the blades as the wind turbine operates. However, within this range, the blades must be precisely set at minimum pitch angles wherein no significant amount of energy is spilled from the blades.

In the Kos et al control system, values of minimum pitch angle ($\beta_{min}$) as a function of velocity ratio $\lambda$ (a product of a constant, the blade diameter and frequency of blade rotation divided by wind velocity) are stored in a function generator or memory 204. It will be appreciated then, that in order to provide an accurate $\beta_{min}$ signal, function generator 204 must be input with accurate readings of wind velocity and rotor frequency of rotation. While the frequency of rotation of the rotor is easily and accurately measurable, an accurate determination of wind velocity is not so easily achieved. Heretofore, it has been the practice to measure wind velocity from a point sensor mounted at a location removed from the wind turbine rotor. It will be appreciated that such a sensor will only sense wind conditions at its immediate location and therefore, due to the presence of nonuniformities in wind velocity, may not accurately reflect the velocity conditions at the rotor. Moreover, even if the velocity sensor could accurately measure wind velocity conditions at the rotor, such a measurement would still be only indicative of wind velocity at the location of the sensor. For accuracy, the minimum blade pitch angle signal should be based on wind conditions integrated over the entire area of the rotor. Clearly, a point wind velocity sensor is not capable of such measurements. Under those low wind velocity conditions wherein minimum blade pitch angle controls the operation of the turbine, even a slight error in the determination of wind velocity can result in blade pitch angle settings wherein the amount of wind energy which the turbine is capable of capturing and, therefore, turbine output, are significantly jeopardized.

The object of the present invention to provide an improved means for accurately determining a minimum blade pitch angle setting for large wind turbine-generators operating at less than rated wind velocity conditions.

In accordance with the present invention, this object is achieved in a blade pitch angle control system for a wind turbine-generator by control means as described in claim 1.

Advantageous embodiments of said control means are claimed in claims 2 and 3.

The invention will now be described by way of example with reference to the accompanying drawings, wherein:

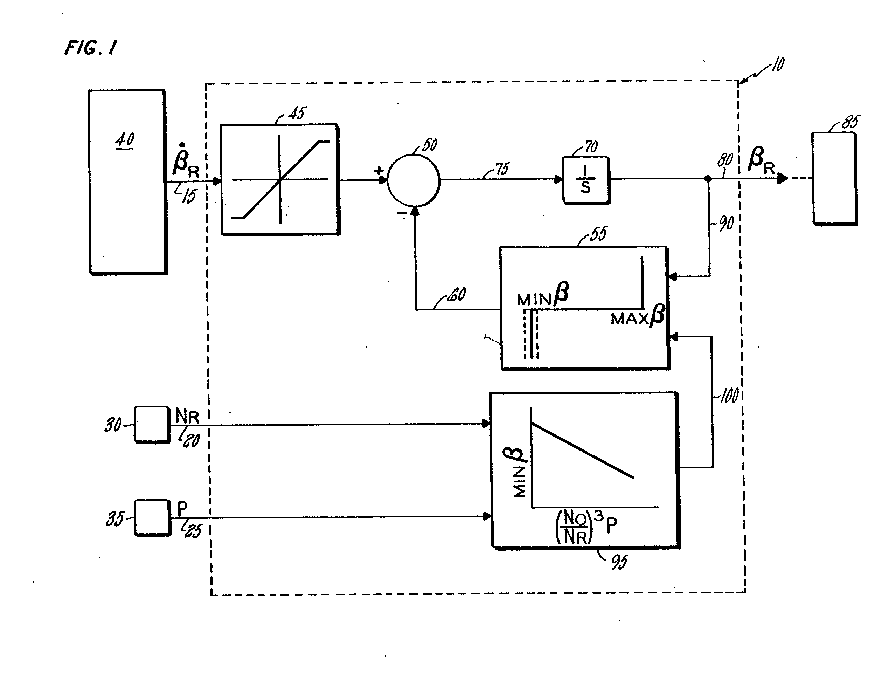

Fig. 1 is a schematic diagram of the preferred embodiment of a wind turbine-generator blade pitch control including the improved control means of the present invention for determining the minimum blade pitch angle setting; and

Fig. 2 is a performance map for a typical large wind turbine-generator.

Referring to the drawing, the blade pitch angle control system of the present invention is shown generally within broken line 10. The system is input with the time derivative ($\dot{\beta}_R$) of a blade pitch angle reference signal on line 15, a signal ($N_R$) indicative of the actual frequency of the rotation of the wind turbine rotor on line 20, and on line 25 a signal (P) indicative of actual output power of the wind turbine. The frequency of rotation and power signals may be readily obtained from suitable transducers 30 and 35, respectively, which are well known in the art. the time derivative ($\dot{\beta}_R$) of the blade pitch angle signal is obtained from controller 40 which for example, may comprise the controller of the hereinabove noted U.S. Patent No. 4,193,005 less the integrator section thereof shown in Fig. 8 of that patent. Thus, the $\dot{\beta}_R$ signal on line 15 is provided from, for example, the mode selector 96 to the Kos et al system, further details regarding the construction and operation of the Kos et al system being readily available from the patent. Reference to the patent shows that control system 10 of the preferred embodiment corresponds generally to that portion of the system shown in Fig. 8 of the patent and referred to at 104 of the block diagram of Fig. 3 thereof.

Again referring to the drawing herein, the derivative signal on line 15 is fed to a limiter 45 which limits the signal to values consistent with the capabilities of the blade pitch actuators in the pitch change actuation system of the turbine. By way of example, where the blade pitch is set by hydraulic actuators, limiter 45 limits the derivative signal to values corresponding to the capabilities of a slew pump which provides pressurized hydraulic fluid to the actuators. From limiter 45 the limited derivative signal is fed to a summing junction 50 which takes the difference between the limited derivative signal and an output signal on line 60 from circuit 55 and feeds this difference to integrator 70 via line 75. Integrator 70 integrates the derivative signal, thereby providing a blade pitch angle reference signal $\beta_R$ along line 80 to a blade pitch actuation system 85 which sets the pitch of the wind turbine blades to that reference signal. The pitch actuation system forms no part of the present invention and is, therefore, not described herein. However, a suitable wind turbine pitch actuation system is described in U.S. Patent No. 4,348,155 to Barnes et al.

The blade pitch angle reference signal from line 80 is fed to circuit 55 through line 90. Circuit 55 compares the pitch angle reference signal to maximum and minimum allowable pitch angle values therein and, if the reference signal on line 90 falls between the maximum and allowable signals, provides a zero output to summing junction 50 through line 60. In the event that the pitch angle reference signal on line 80 is greater than the maximum allowable (90°) reference signal corresponding to a feathered condition of the blades, circuit 55 provides a high gain output signal on line 60 which effectively cancels the time derivative input signal to summing junction 50 to shut integrator 70 off thereby limiting the maximum allowable pitch angle reference signal provided to actuator system 85 to 90°. In a similar manner, in the event that the pitch angle reference signal on line 80 is less than a minimum allowable pitch angle (MIN β) circuit 55 provides a high gain output signal on line 60 which in summing junction 50, cancels the time derivative signal to prevent the integrator 70 from integrating to a value less than a minimum value corresponding to the desired blade pitch angle setting under minimum (less than rated) wind velocity conditions. As noted hereinabove, the maximum blade pitch angle signal within circuit 55 is a constant (90°) stored therein while the minimum pitch angle signal (MIN β) is a variable which is input to circuit 55 from function generator 95 through line 100.

As noted above, under conditions of less than rated wind velocity, the wind turbine's blades are set to the MIN β position corresponding to optimal capture of wind energy by the blades with no "spillage" of wind therefrom. As further noted, to achieve such optimal energy capture, the accuracy of the MIN β signal must be optimized. In accordance with the present invention, such signal accuracy is achieved by function generator 95 which provides a MIN β output signal to line 100 based upon the rotational frequency of the wind turbine rotor and the power output thereof rather than wind velocity at a point location. As indicated in the drawing, values of MIN β are stored within function generator 95 as functions of

$$\left(\frac{N_0}{N_R}\right)^3 P.$$

In this expression, as set forth hereinabove, P is indicative of the actual output power of the turbine and $N_R$ the frequency of rotation of the turbine rotor. $N_0$ is the nominal frequency of rotation of the turbine rotor or, in other words, the maximum frequency of rotation of the rotor at cut-in wind velocity.

It will be appreciated by those skilled in the art that output power is itself a function of wind velocity. Thus, by basing the MIN β reference signal on output power, this signal is in effect based on wind velocity conditions across the entire diameter of the wind turbine rotor thereby enhancing the accuracy of this reference signal. The accuracy with which turbine output power is measured further enhances the accuracy of the pitch angle reference signal.

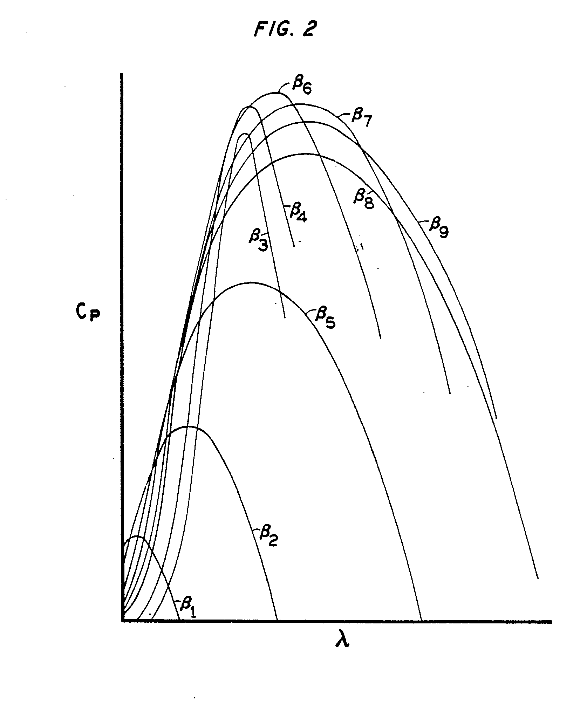

Function generator 95 may be programmed as follows. Referring to Fig. 2, there is shown a performance map for a typical large wind turbine-generator, the map being determined by known analytical techniques on the basis of turbine geometry. It is seen that the performance map comprises a family of curves which plot power coefficient $C_P$ (the ratio of the amount of power which may be captured by the turbine to the amount of available power in the wind stream intercepted by the turbine) against velocity ratio for a number of different blade pitch angle settings. It will be seen that for any one value of velocity ratio λ, there exists a corresponding single maximum power coefficient at a single pitch angle. Stated conversely, for every maximum power coefficient, there is a blade angle setting by which the wind turbine may attain such a power coefficient for a given velocity ratio. For any velocity ratio $\lambda$, from the data available in Fig. 2, a nominal wind velocity may be calculated from the following expression:

$$V_o = \frac{\pi N_o D}{60\lambda}$$

wherein d is the diameter of the wind turbine rotor. Having calculated the nominal wind velocity, nominal power may be calculated from the expression:

$$P_o = \tfrac{1}{2}\rho \frac{\pi D^2}{4}(V_o)^3 C_{PO}$$

wherein
  $\rho$ is the density of the air; and
  $C_{PO}$ is the maximum power coefficient corresponding to the velocity ratio by which $V_o$ was calculated.

Thus, it is seen that for each pitch angle corresponding to a maximum power coefficient in Fig. 2, there is a value of nominal power associated therewith. Function generator 95 provides the blade pitch angle setting (MIN $\beta$) at which such nominal output power is achieved at a given wind velocity, or, in other words, the blade pitch angle setting wherein an optimum amount of energy may be captured from the wind at such a velocity. In function generator 95, the expression

$$\left(\frac{N_o}{N_R}\right)^3$$

is a correction factor necessitated by the fact that the calculated power is a nominal power. Actual power is related to nominal power by the expression

$$\frac{P_o}{P} = \left(\frac{N_o}{N_R}\right)^3$$

The wind turbine blade pitch control system of the present invention is readily implemented by either analog or digital techniques. Accordingly, the circuit 95 described hereinabove as a function generator may comprise a digital data lookup memory. Likewise, the other components described hereinabove may comprise analog or digital apparatus. While the control system has been described with respect to providing a minimum blade angle system based on output power, it will be appreciated that the pitch angle signal may be based on turbine shaft torque with equal utility, it being recognized that actual torque, like power, provides a basis for a minimum blade angle setting which essentially integrates wind speed conditions across the entire turbine rotor. Moreover, while the system herein has been described in exemplary fashion as a subsystem for a blade pitch angle control system such as the patented Kos et al system, it will be understood that the system of the present invention is not limited to such use and may be employed in any blade pitch control system requiring a signal indicative of minimum pitch angle at low wind velocities.

Having thus described the invention, what is claimed is;

## Claims

1. In a blade pitch angle control system for a wind turbine-generator comprising a rotor having a plurality of variable pitch airfoil blades fixed thereto and driving an electric generator through a drive train, control means (10) for providing a reference signal ($\beta_R$) indicative of desired blade pitch angle at less than rated wind speed conditions, said control means comprising means (30) providing a frequency signal ($N_R$) indicative of rotational frequency of said wind turbine; and being characterized by:
  means (35) providing an output signal (P) indicative of actual wind turbine output; and
  signal processing means (204) responsive to said output (P) and frequency ($N_R$) signals for providing a blade pitch angle reference signal as a function of the product of the output signal (P) and the cube of the quotient of the nominal rotational frequency ($N_o$) of said wind turbine and the frequency of rotation ($N_R$) of said wind turbine, the so provided blade pitch angle reference signal being indicative of a blade pitch angle setting corresponding to attainment by said wind turbine of said output at less than rated wind velocity.

2. The blade pitch angle control system according to claim 1, further characterized by said output signal comprising a signal indicative of the actual electrical output of said electric generator.

3. The blade pitch angle control system according to claim 1 further characterized by said output signal comprising a signal indicative of drive train torque.

## Patentansprüche

1. In einer Regelvorrichtung für die Verstellung der Flügel einer Windkraftmaschine-Generator-Anordnung, die einen Rotor mit mehreren daran festgemachten Flügeln mit veränderbarem Anstellwinkel hat, und über einen Antriebszug einen elektrischen Generator antreibt, Regeleinrichtungen (10) zur Bereitstellung eines Bezugsignals ($\beta_R$), welches den Soll-Blattanstellwinkel bei kleineren als Nennwindgeschwindigkeitsbedingungen darstellt, wobei die Regeleinrichtungen Mittel (30) zur Erzeugung eines Frequenzsignals ($N_R$), welches der drehzahl der Windkraftmaschine anzeigt, hat und gekennzeichnet ist, durch eine Einrichtung (35) zur Bereitstellung eines Ausgangssignals (P), welches die Istleistungsabgabe der Windkraftmaschine darstellt und eine Signalverarbeitungseinrichtung (204), welche auf das Ausgangssignal (P) und das Frequenzsignal ($N_R$) anspricht, um ein Blattenstellwinkelbezugssignal als Funktion des Produktes des Ausgangssignals (P) und der dritten Potenz des Quotienten der Nenndrehzahl ($N_O$) der Windkraftmaschine und der Drehzahl ($N_R$) der Windkraftmaschine zu erzeugen, wobei das so gelieferte Blattanstellwinkelbezugssignal die Blattanstellwinkeleinstellung darstellt, welche derjenigen entspricht für die Erreichung der Leistungsabgabe durch die Windkraftmaschine bei kleineren Windgeschwindigkeit als die Nennwindgeschwindigkeit.

2. Regelvorrichtung für die Verstellung der Flügel nach Anspruch 1, desweiteren dadurch gekennzeichnet, dass das Ausgangssignal ein Signal ist, welches die elektrische Istleistungsabgabe des Elektrogenerators ist.

3. Regelvorrichtung für die Verstellung der Flügel nach Anspruch 1, desweiteren gekennzeichnet, dass das Ausgangssignal ein Signal ist, welches das Drehmoment des Antriebzuges darstellt.

**Revendications**

1. Dans un dispositif de réglage du pas de l'hélice pour une combinaison turbine éolienne-générateur comprenant un rotor auquel sont fixées plusieurs pales à pas variable et entraînant un générateur électrique par un train d'entraînement, des moyens de commande (10) pour fournir un signal de référence ($\beta_R$) indiquant le pas désiré des pales pour des conditions de vitesse du vent inférieures aux conditions nominales de la vitesse du vent, ledit moyen de commande comprenant un moyen (30) pour fournir un signal de fréquence ($N_R$) indiquant la fréquence de rotation de la turbine éolienne et étant caractérisé par un moyen (35) pour fournir un signal de sortie (P) indiquant la puissance réelle fournie par la turbine éolienne et un moyen de traitement de signaux (204) répondant audit signal de sortie (P) et audit signal de fréquence ($N_R$) pour fournir un signal de référence du pas des pales comme fonction du produit du signal de sortie (P) et de la troisième puissance du quotient de la fréquence de rotation nominale ($N_O$) de ladite turbine éolienne et de la fréquence de rotation ($N_R$) de ladite turbine éolienne, le signal de référence du pas des pales ainsi fourni indiquant un ajustage du pas des pales correspondant à celui pour réaliser avec ladite turbine éolienne ladite puissance de sortie à une vitesse du vent inférieure à la vitesse nominale du vent.

2. Dispositif de réglage du pas de l'hélice selon la revendication 1, caractérisé en outre en ce que ledit signal de sortie est un signal indiquant la puissance de sortie électrique réelle dudit générateur électrique.

3. Dispositif de réglage du pas de l'hélice selon la revendication 1, caractérisé en outre en ce que ledit signal de sortie est un signal indiquant le moment du train d'entraînement.

FIG. 1

0 112 792

FIG. 2